# FASCICULE DE BREVET EUROPEEN

(11) **EP 1 610 026 B1**
(45) Date de publication et mention de la délivrance du brevet: **16.01.2008**
(21) Numéro de dépôt: 04291557.9
(22) Date de dépôt: 21.06.2004
(51) Int. Cl.: F16D 65/095, F16D 65/14, B60T 13/74, F16D 55/225

(54) **Etrier de frein à disque électromécanique**
Bremssattel für eine elektromechanische Scheibenbremse
Brake caliper for an electromechanical disc brake

(43) Date de publication de la demande: 28.12.2005
(73) Titulaire: Delphi Technologies, Inc., Troy, MI 48007 (US)
(72) Inventeur: Delayre, Xavier, 92400 Courbevoie (FR); Longuemare, Pierre, 75012 Paris (FR); Padiolleau, Eric, 60200 Compiègne (FR); Louvet, Stéphane, 75116 Paris (FR)
(74) Mandataire: Abello, Michel

(56) Documents cités:
- DE-A- 19 831 838
- GB-A- 735 748
- US-A- 5 934 418
- US-B1- 6 719 103

## Description

La présente invention concerne un étrier de frein à disque électromécanique, en particulier, mais non exclusivement, destiné à équiper des véhicules automobiles.

En général, un étrier de frein est associé à chacune des roues d'un véhicule automobile pour obtenir un freinage équilibré et efficace.

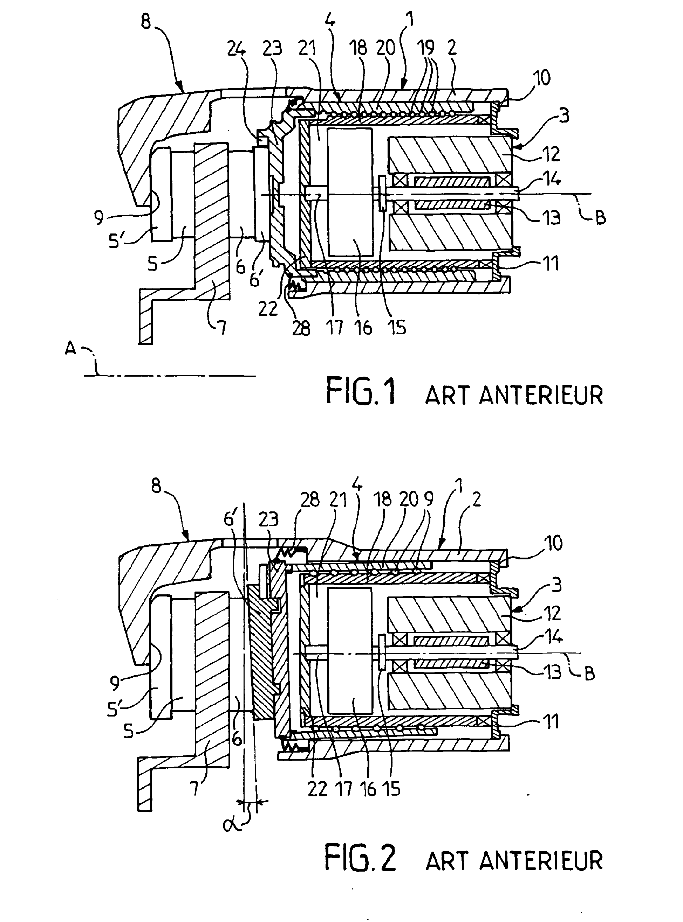

Un tel étrier de frein électromécanique selon l'art antérieur est représenté sur la figure 1 des dessins annexés. La partie gauche de cette figure correspond au côté de l'étrier électromécanique 1 placé en regard de la roue. Nous parlerons du côté roue par opposition au côté carrosserie. L'axe A représente l'axe de la roue (non représentée).

L'étrier électromécanique 1 comporte un boîtier 2 à l'intérieur duquel sont logés un moteur électrique 3, une vis à billes 4 et des plaquettes de frein externe 5 et interne 6 disposées de part et d'autre d'un disque de frein 7. Les plaquettes de frein 5 et 6 sont constituées d'un matériau possédant un coefficient de frottement élevé. Elles sont solidaires d'une tôle de fixation respective 5' et 6'.

Le boîtier 2 illustré est du type monté flottant selon la direction perpendiculaire au disque de frein 7 sur un élément solidaire de la carrosserie du véhicule. Il comporte, côté roue, une extension latérale en L 8 en une seule pièce avec le reste du boîtier et ayant une surface interne 9 contre laquelle la plaquette de frein externe 5 est fixée par l'intermédiaire de la tôle de fixation correspondante 5'. Le boîtier 2 comporte, côté carrosserie, un épaulement 10. Un élément de maintien 11 placé sur l'épaulement 10 du boîtier 2 et comportant un moyen de fixation du moteur électrique 3 permet de solidariser celui-ci au boîtier 2.

Le moteur électrique 3 utilisé dans un étrier électromécanique peut être n'importe quel moteur à courant continu. Dans l'exemple illustré, le moteur électrique 3 est un moteur à aimant permanent. Le moteur électrique 3 comporte un stator 12 constitué d'une pluralité d'enroulements de fils de cuivre. Il est fixe par rapport au boîtier 2 et solidaire de l'élément de maintien 11.

Le stator 12 comporte un trou cylindrique central d'axe B à l'intérieur duquel est logé un rotor 13, constitué d'un aimant permanent et apte à tourner autour de l'axe B. Lorsqu'une puissance électrique est fournie à cette pluralité d'enroulements du stator 12, le rotor 13 subit une force qui le met en rotation autour de l'axe B. Le moteur électrique 3 comporte un arbre moteur 14 solidaire du rotor 13. Lorsque ce dernier est mis en mouvement, il transmet son mouvement de rotation à l'arbre moteur 14.

Afin de piloter le fonctionnement du moteur électrique 3 à aimant permanent, un capteur de position angulaire 15 est fixé sur l'arbre moteur 14 en sortie du moteur électrique 3. Ce capteur 15 permet de mesurer l'angle de rotation de l'arbre moteur 14 et donc du rotor 13, par rapport au stator 12. Le capteur de position angulaire 15 est typiquement un capteur à effet Hall.

En sortie du moteur électrique 3, l'arbre moteur 14 est couplé avec une boîte de réduction 16 possédant un arbre de sortie 17. La boîte de réduction 16 permet d'obtenir un rapport entre la vitesse de rotation de l'arbre moteur 14 et la vitesse de rotation de l'arbre de sortie 17, typiquement de 30 pour 1. Et, pour une rotation d'un angle de rotation donné de l'arbre moteur 14, l'arbre de sortie 17 tournera d'un angle de rotation 30 fois plus faible. En revanche, l'intensité du couple de l'arbre de sortie 17 est 30 fois plus important que le couple de l'arbre moteur 14.

La vis à billes 4 mentionnée ci-dessus est couplée à l'arbre de sortie 17. Cette vis à billes 4 comporte une partie formant vis 18, des billes 19 et une partie formant écrou 20. Cette dernière est guidée dans le boîtier 2 sur son diamètre et son blocage en rotation est assuré par un emmanchement dans le piston 23 qui est lui-même retenu par la tôle de fixation 6' au moyen du blocage 24.

La partie formant vis 18 est de forme cylindrique et s'étend autour de l'axe B. Elle est creuse et définit dans son intérieur une cavité cylindrique 21 recevant le moteur 3, la boîte de réduction 16, ainsi que leurs axes respectifs 14, 17. La partie formant vis 18 est en liaison avec l'arbre de sortie 17 par l'intermédiaire d'une extrémité radiale close 22. La rotation de l'arbre de sortie 17 est ainsi transmise à la partie formant vis 18 de la vis à billes 4.

La surface extérieure filetée de la partie formant vis 18 et la surface intérieure taraudée de la partie formant écrou 20, en regard l'une de l'autre, forment ensemble un canal hélicoïdal recevant les billes 19. Cet agencement permet à la partie formant vis 18 animée d'un mouvement de rotation par rapport au boîtier 2 d'entraîner la partie formant écrou 20 dans un mouvement de translation par rapport au boîtier 2.

Du côté roue, la partie formant écrou 20 est reliée à un support transversal 23 maintenant la plaquette de frein interne 6 par l'intermédiaire de la tôle de fixation 6' de celle-ci. Dans l'exemple illustré, ce support transversal 23 forme un capuchon obturant la partie formant écrou 20 radialement. La plaquette de frein est retenue dans une chape de frein classique (non représenté) reliée au boîtier et qui assure son blocage en rotation sous l'effet combiné du piston 23 et du frottement sur le disque de frein.

Lorsque la partie formant écrou 20 est animée d'un mouvement de translation par rapport au boîtier 2 dirigée vers le côté roue, la plaquette de frein interne 6, maintenue par le capuchon d'écrou constituant le support transversal 23, se rapproche de la plaquette de frein externe 5. Simultanément, le boîtier flottant 2 subit une force de réaction et est déplacé dans un mouvement de translation ver la droite à la figure 1.

Ainsi, la surface de contact interne de la plaquette de frein externe 5 et la surface de contact externe de la plaquette de frein interne 6, en regard l'une de l'autre, se rapprochent mutuellement, et le disque de frein 7 placé entre lesdites surfaces de contact est serré entre celles-ci. Le disque 7 étant solidaire de la roue, la force de serrage entraîne un frottement qui a pour conséquence de ralentir le mouvement de rotation de la roue autour de l'axe de rotation A et donc de freiner le véhicule.

Même si les étriers de frein électromécaniques de ce genre donnent généralement satisfaction, leur boîtier 2 ainsi que leur vis à billes 4 peuvent lors de l'actionnement de l'étrier 1 être exposés à des forces extrêmement élevées qui entraînent un fléchissement plus ou moins notable de ces deux éléments. Ce fléchissement entraîne un mauvais alignement entre le boîtier 2 et la partie formant écrou 20 de la vis à billes 4.

Ce défaut d'alignement provoqué par une sollicitation importante est schématiquement illustré à la figure 2. On y voit que la tôle de fixation 6' de la plaquette interne 6 est inclinée d'un angle α par rapport à un plan radial perpendiculaire à l'axe B et que ce même angle α se retrouve en haut de cette figure entre un plan parallèle à cet axe B et la partie formant écrou 20 de la vis à billes 4.

Le défaut d'alignement peut être aggravé par une usure en biais des plaquettes de frein.

La conséquence de ce défaut d'alignement est qu'une perte d'efficacité voire un grippage se produit entre la partie formant écrou 20 de la vis à billes et la paroi interne du boîtier 2 qui sert au guidage de la partie formant écrou lors des déplacements en translation de celle-ci.

Le document US 6 719 103 B1 montre un étrier de frein à disque électromécanique d'après le préambule de la revendication 1.

L'invention a pour but de remédier à cet inconvénient en proposant un étrier de frein électromécanique permettant d'éviter le phénomène de grippage dans l'étrier.

Un autre but de l'étrier selon l'invention est d'augmenter le rendement de l'étrier en centrant la force dans l'axe de la vis à billes, non seulement dans la direction de retour, mais aussi dans la direction d'avancement vers le disque de frein. Par conséquent, il augmente aussi la durée de vie de la vis à billes et réduit la consommation de courant dans l'étrier.

L'objet de l'invention est un étrier de frein à disque électromécanique, comportant un boîtier logeant un moteur électrique apte à actionner une vis à billes reliée à un support transversal d'une première plaquette de frein, une deuxième plaquette de frein étant reliée au boîtier de manière à être disposée en regard de ladite première plaquette de frein pour recevoir entre elles un disque de frein, ladite vis à billes étant apte à rapprocher lesdites plaquettes de frein l'une de l'autre lors d'une action de freinage afin de serrer entre elles ledit disque de frein, caractérisé par le fait que ledit support transversal est composé d'un premier plateau et d'un deuxième plateau globalement parallèles l'un à l'autre, lesdits premier et deuxième plateaux étant reliés en rotation l'un à l'autre par des moyens de liaison, et en appui l'un contre l'autre par des surfaces d'appui centrales respectives relativement limitées entourées par des surfaces annulaires définissant entre elles un espace libre annulaire de manière à permettre une légère inclinaison dudit deuxième plateau par rapport audit premier plateau lors du fonctionnement de l'étrier.

Selon d'autres caractéristiques de l'invention :
- lesdites surfaces d'appui sont prévues d'une part sur une protubérance sur l'un desdits premier et deuxième plateaux, et d'autre part dans un évidement effectué dans l'autre plateau ;
- lesdites surfaces d'appui sont des surfaces planes ;
- ladite protubérance et ledit évidement présentent des formes tronconiques globalement complémentaires ;
- le diamètre de ladite surface d'appui dans ledit évidement est légèrement plus grand que celui sur ladite surface d'appui de ladite protubérance afin de permettre un léger débattement radial dudit deuxième plateau par rapport audit premier plateau ;
- ledit deuxième plateau est retenu par un organe annulaire souple relié d'une part audit boîtier et d'autre part à la périphérie dudit deuxième plateau ;
- ledit deuxième plateau est logé dans un logement circulaire axial s'étendant sur la plus grande partie de la face externe dudit premier plateau ;
- ledit deuxième plateau est retenu contre le premier plateau par un anneau de ressort relié d'une part à la périphérie dudit premier plateau et d'autre part à la périphérie dudit deuxième plateau ;
- ledit anneau de ressort comporte des dents régulièrement réparties sur sa périphérie interne et en appui contre la face externe dudit deuxième plateau ;
- ladite protubérance est constituée par un insert logé dans un évidement circulaire central de l'un desdits plateaux ;
- lesdits moyens de liaison entre lesdits premier et deuxième plateaux comportent des ergots disposés à la périphérie de l'un desdits plateaux et coopérant avec des échancrures opposées sur la périphérie de l'autre plateau de manière à bloquer ledit deuxième plateau en rotation par rapport audit premier plateau.

D'autres caractéristiques et avantages de l'invention ressortiront de la description qui va suivre de deux modes de réalisation non limitatifs de l'invention, en référence aux figures annexées dans lesquelles :
- la figure 1 est une vue en coupe axiale d'un étrier de frein électromécanique selon l'état de la technique déjà décrit ci-dessus ;
- la figure 2 est une vue en coupe axiale d'un étrier de frein électromécanique selon l'état de la technique illustrant le problème de grippage dans cet étrier ;
- la figure 3 est une vue en coupe axiale d'un premier mode de réalisation d'un étrier de frein électromécanique selon l'invention ;
- la figure 4 est une vue en coupe axiale d'un étrier de frein électromécanique selon l'invention illustrant le principe de fonctionnement de cet étrier sans grippage ;
- la figure 5 est une vue en perspective du deuxième plateau d'un support transversal selon l'invention ;
- la figure 6 est une vue en perspective du premier plateau d'un support transversal selon l'invention ;
- la figure 7 est une vue en perspective et partiellement en coupe des premier et deuxième plateaux du support transversal selon l'invention ;
- la figure 8 est une vue en coupe axiale partielle schématique d'un deuxième mode de réalisation d'un étrier de frein électromécanique selon l'invention ;
- la figure 9 est une vue en perspective éclatée du support transversal de la figure 8 ;
- la figure 10 est une vue en perspective montrant le support transversal de la figure 9 après assemblage ; et
- la figure 11 est un diagramme indiquant les résultats de tests comparatifs démontrant l'augmentation du rendement de la vis à billes de l'étrier selon l'invention par rapport à la vis à billes d'un étrier connu en termes de force de sortie.

Dans les figures, les éléments identiques ou équivalents porteront les mêmes signes de référence. Par ailleurs, les éléments identiques ou équivalents ne seront pas décrits de nouveau et seuls les éléments différents et relatifs à l'invention seront décrits en détail.

L'étrier de frein électromécanique 1 selon l'invention comporte, tout comme l'étrier décrit en référence à la figure 1, un boîtier flottant 2 à l'intérieur duquel sont logés un moteur électrique 3, une vis à billes 4 et des plaquettes de frein externe 5 et interne 6 disposées de part et d'autre d'un disque de frein 7. La vis à billes 4 présente la même structure que celle déjà décrite en référence à la figure 1 et comporte ainsi une partie formant vis 18 et une partie formant écrou 20.

Le moteur électrique 3 est apte à actionner la vis à billes 4 par l'intermédiaire du boîtier de réduction 16 dont la partie formant écrou 20 est reliée à un support transversal 23 portant une tôle de fixation 6' de la plaquette interne 6 qui est désignée première plaquette de frein, alors qu'une tôle de fixation 5' de la plaquette externe 5 désignée deuxième plaquette de frein est reliée par une extension latérale en L du boîtier 8.

De cette manière, et comme déjà mentionné en référence à la figure 1, la première plaquette de frein 5 et la deuxième plaquette de frein 6 sont disposées en regard l'une de l'autre pour recevoir entre elles un disque de frein 7. La vis à billes 4 est apte à rapprocher les plaquettes de frein 5, 6 l'une de l'autre lors d'une action de freinage afin de serrer entre elles le disque de frein 7.

Selon une caractéristique importante de l'invention, le support transversal 23 de la plaquette de frein interne 6 est composé d'un premier plateau 23' et d'un deuxième plateau 23" globalement parallèles l'un à l'autre et reliés en rotation l'un à l'autre par des moyens de liaison périphériques 26, 27.

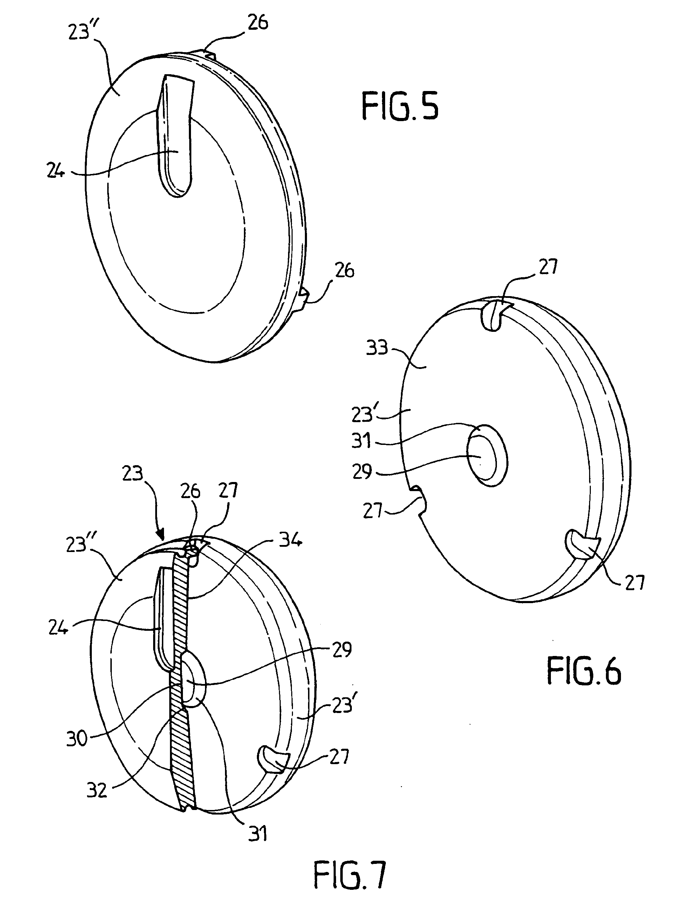

Ces moyens de liaison comportent dans l'exemple illustré des ergots 26 régulièrement répartis sur la périphérie de la face interne du deuxième plateau 23" et coopérant avec des échancrures opposées régulièrement réparties sur la périphérie de la face externe du premier plateau 23' (voir figures 5 à 7). Ces moyens de liaison 26, 27 bloquent ainsi en rotation le deuxième plateau 23" par rapport au premier plateau 23' qui est porté directement par la partie formant vis 18 de la vis à billes 4.

Le deuxième plateau 23" du support transversal 23 est retenu par un organe annulaire souple 28 relié d'une part au boîtier 2 et d'autre part à la périphérie du deuxième plateau 23". Cette organe annulaire souple a avantageusement la forme d'un soufflet de protection empêchant la poussière et l'humidité de pénétrer à l'intérieur de la vis à billes 4.

Les premier et deuxième plateaux 23', 23" du support transversal 23 sont en appui l'un contre l'autre par des surfaces d'appui centrales respectives 29, 30 constituées par des surfaces planes relativement limitées prévues sur une protubérance 31 respectivement dans un évidement 32 du premier plateau 23' respectivement du deuxième plateau 23".

La protubérance 31 et l'évidement 32 présentent des formes tronconiques globalement complémentaires, hormis le fait que le diamètre de la surface d'appui 30 dans l'évidement 32 est légèrement plus grand que celui de la surface d'appui 29 sur la protubérance 31 afin de permettre un léger débattement radial du deuxième plateau 23" par rapport au premier plateau 23'.

Ces surfaces d'appui 29, 30 sont entourées par de grandes surfaces annulaires respectives 33, 34 définissant entre elles un interstice annulaire 35 grâce au fait que l'extension radiale de la protubérance 31 est plus importante que celle de l'évidement 32. Cette disposition permet une légère inclinaison du deuxième plateau 23" par rapport au premier plateau 23' lors du fonctionnement de l'étrier.

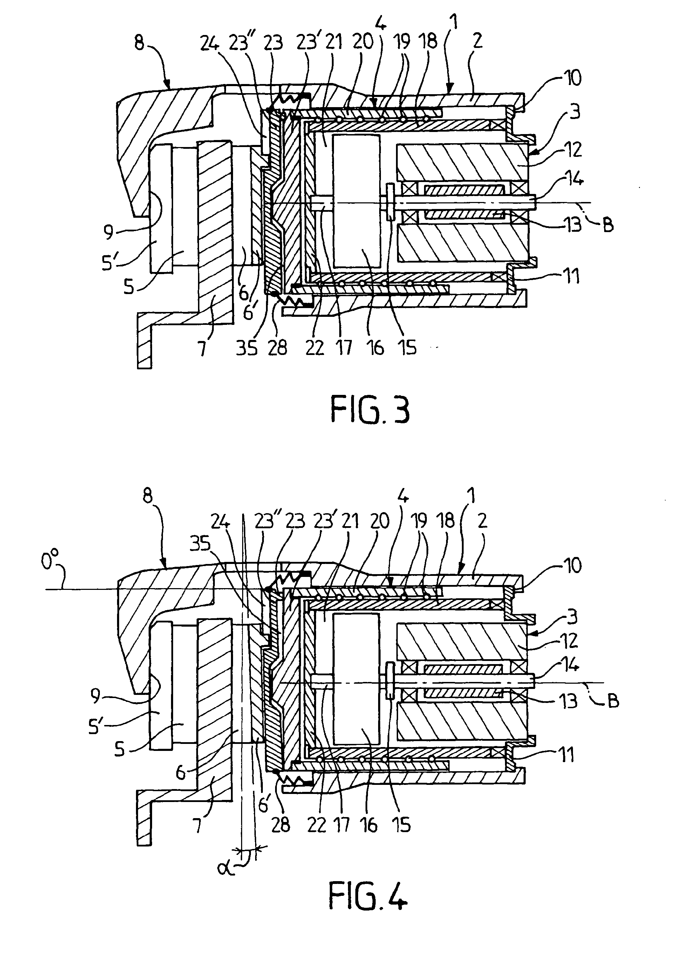

L'effet de l'agencement selon l'invention est illustré à la figure 4 qui montre qu'une inclinaison de la tôle 6' portant la première plaquette de frein 6 n'a lors du freinage par le serrage des plaquettes de frein 5, 6 contre le disque de frein 7 aucune répercussion sur la vis à billes 4 grâce au fait que le deuxième plateau 23" du support transversal 23 peut suivre cette inclinaison qui par conséquent n'est pas transmise à la partie formant écrou 20 de la vis à billes 4. Autrement dit, l'inclinaison entre la paroi interne du boîtier 2 et la paroi externe de la partie formant écrou 20 est de 0°.

Grâce à l'invention, aucun grippage ne se produit plus dans la vis à billes 4 lors du retour de la partie formant écrou 20 après freinage.

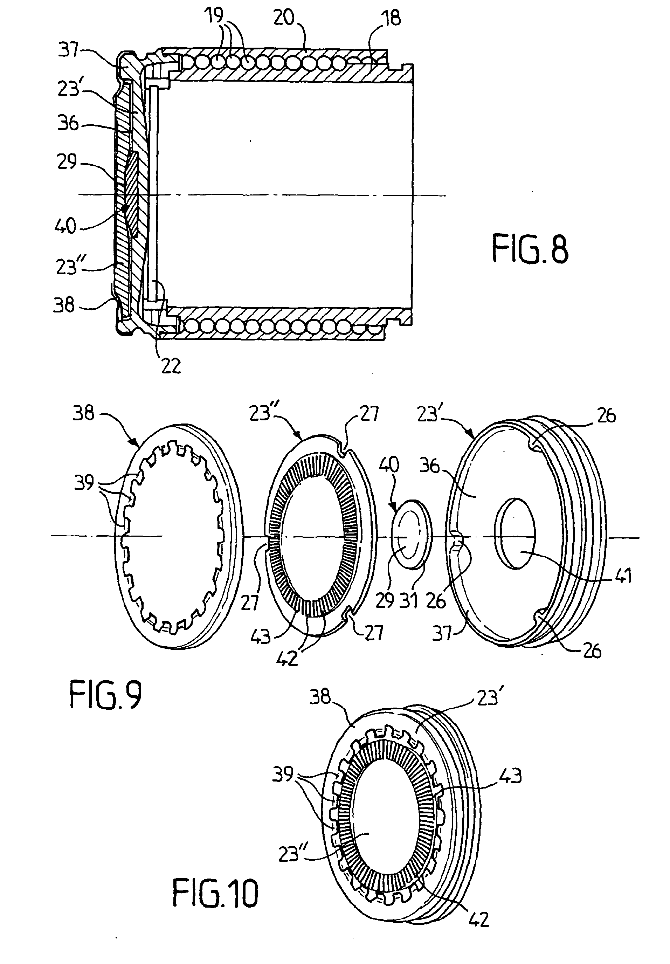

La figure 8 montre schématiquement une vis à billes 4 et un support transversal 23 selon un deuxième mode de réalisation de l'invention. Le deuxième plateau 23" du support transversal 23 est ici disposé dans un logement circulaire axial 36 s'étendant sur la plus grande partie de la face externe du premier plateau 23' du support. Le logement 36 est délimité par une collerette périphérique 37 qui sur sa face interne est pourvue d'ergots 26 régulièrement espacés et aptes à coopérer avec des échancrures 27 sur la périphérie du deuxième plateau 23".

Le deuxième plateau 23" est retenu contre le premier plateau 23' par un anneau de ressort 38 relié d'une part à la périphérie du premier plateau 23' et d'autre part à la périphérie du deuxième plateau.

L'anneau de ressort 38 présente une section en L et est monté à force sur le premier plateau 23'. Il comporte des dents élastiques 39 régulièrement réparties sur sa périphérie interne qui sont en appui contre la face externe du deuxième plateau 23".

Dans une variante de ce deuxième mode de réalisation, la protubérance 31 sur le premier plateau 23' est constituée par un insert 40 logé dans un évidement circulaire central sur la face externe de ce premier plateau 23'.

Dans le mode de réalisation illustré sur les figures 8 à 10, les moyens de blocage en rotation sur le deuxième plateau 23" du support transversal 23 comportent des rainures radiales 42 disposées sur un segment annulaire 43 de la face externe du deuxième plateau 23" et centré sur celui-ci. Ces rainures radiales viennent mordre dans un support antibruit en caoutchouc (non représenté) de la tôle de support de la plaquette de frein.

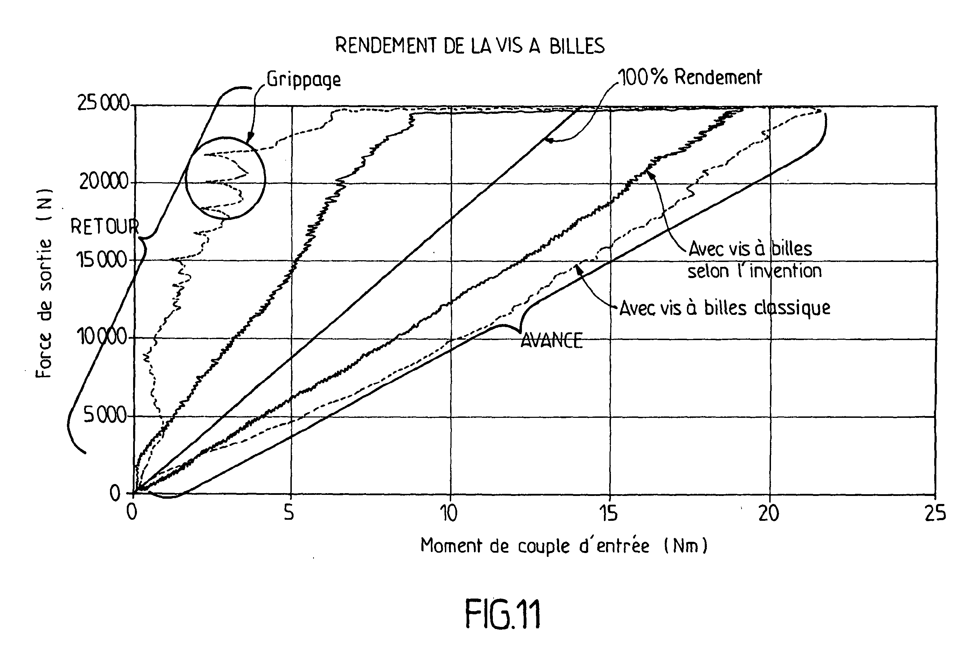

Les figures 11 à 14 montrent les résultats d'essais comparatifs effectués sur un étrier de frein à disque électromécanique classique d'une part et un étrier de frein à disque électromécanique selon l'invention d'autre part.

Le déplacement des plaquettes de frein 5, 6 vers le disque de frein 7 pour le serrage de celui-ci lors d'un freinage, ainsi que la force de freinage exercée par les plaquettes contre le disque, sont fonction du courant dans le moteur électrique 3 et du rapport de transmission dans la boîte de réduction 16 et dans la vis à billes. Dans les essais, le moteur était constitué d'un moteur triphasé dont le courant global était mesuré sur l'alimentation principale.

Le moteur électrique 3 et le rapport de transmission sont calculés pour permettre l'obtention d'une force maximum sur les plaquettes de frein 5, 6 pour provoquer la décélération nécessaire par l'alimentation d'un courant présentant une valeur acceptable, exprimée en ampères (A).

La figure 11 montre la force de sortie (exprimée en N) en fonction du moment de couple d'entrée (exprimé en Nm) pour un étrier classique et pour un étrier selon l'invention. Un cercle à gauche sur cette figure montre une zone de grippage lors du retour de la vis à billes 4 vers sa position de repos. On constate qu'aucune zone de grippage n'est présente lors du fonctionnement de l'étrier de frein selon l'invention.

Les essais ont montré de manière surprenante que l'étrier de frein selon l'invention améliore en plus le rendement dans la direction d'avancement de la vis à billes.

En termes de consommation de courant, on a pu constater une réduction spectaculaire du courant de retour nécessaire pour l'étrier selon l'invention par rapport à celui de l'étrier classique.

Bien entendu, l'invention n'est pas limitée aux exemples illustrés et décrits, mais peut être appliquée à tout étrier de frein électromécanique, y compris les freins électromagnétiques du type à boîtier fixe.

## Revendications

1. Etrier de frein à disque électromécanique, comportant un boîtier (2) logeant un moteur électrique (3) apte à actionner une vis à billes (4) reliée à un support transversal (23) d'une première plaquette de frein (6), une deuxième plaquette de frein (5) étant reliée au boîtier (2) de manière à être disposée en regard de ladite première plaquette de frein (6) pour recevoir entre elles un disque de frein (7), ladite vis à billes (4) étant apte à rapprocher lesdites plaquettes de frein (5, 6) l'une de l'autre lors d'une action de freinage afin de serrer entre elles ledit disque de frein (7), **caractérisé par le fait que** ledit support transversal (23) est composé d'un premier plateau (23') et d'un deuxième plateau (23") globalement parallèles l'un à l'autre, lesdits premier et deuxième plateaux (23', 23") étant reliés en rotation l'un à l'autre par des moyens de liaison (26, 27), et en appui l'un contre l'autre par des surfaces d'appui centrales respectives (29, 30) relativement limitées entourées par des surfaces annulaires (33, 34) définissant entre elles un espace libre annulaire (35) de manière à permettre une légère inclinaison dudit deuxième plateau (23") par rapport audit premier plateau (23') lors du fonctionnement de l'étrier.

2. Etrier de frein selon la revendication 1, **caractérisé par le fait que** lesdites surfaces d'appui (29, 30) sont prévues d'une part sur une protubérance (31) sur l'un desdits premier et deuxième plateaux (23', 23"), et d'autre part dans un évidement (32) effectué dans l'autre plateau (23", 23').

3. Etrier de frein selon la revendication 1 ou 2, **caractérisé par le fait que** lesdites surfaces d'appui (29, 30) sont des surfaces planes.

4. Etrier de frein selon la revendication 3, **caractérisé par le fait que** ladite protubérance (31) et ledit évidement (32) présentent des formes tronconiques globalement complémentaires.

5. Etrier de frein selon la revendication 4, **caractérisé par le fait que** le diamètre de ladite surface d'appui (30) dans ledit évidement (32) est légèrement plus grand que celui sur ladite surface d'appui (29) de ladite protubérance (31) afin de permettre un léger débattement radial dudit deuxième plateau (23 ") par rapport audit premier plateau (23').

6. Etrier de frein selon l'une quelconque des revendications précédentes, **caractérisé par le fait que** ledit deuxième plateau (23") est retenu par un organe annulaire souple (28) relié d'une part audit boîtier (2) et d'autre part à la périphérie dudit deuxième plateau (23").

7. Etrier de frein selon l'une quelconque des revendications précédentes, **caractérisé par le fait que** ledit deuxième plateau (23") est logé dans un logement circulaire axial (36) s'étendant sur la plus grande partie de la face externe dudit premier plateau (23').

8. Etrier de frein selon la revendication 7 en combinaison avec l'une quelconque des revendications 1 à 5, **caractérisé par le fait que** ledit deuxième plateau (23") est retenu contre le premier plateau (23') par un anneau de ressort (38) relié d'une part à la périphérie dudit premier plateau (23') et d'autre part à la périphérie dudit deuxième plateau (23").

9. Etrier de frein selon la revendication 8, **caractérisé par le fait que** ledit anneau de ressort (38) comporte des dents (39) régulièrement réparties sur sa périphérie interne et en appui contre la face externe dudit deuxième plateau (23").

10. Etrier de frein selon l'une quelconque des revendications 2 à 9, **caractérisé par le fait que** ladite protubérance (31) est constituée par un insert logé dans un évidement circulaire central (41) de l'un desdits plateaux (23', 23").

11. Etrier de frein selon l'une quelconque des revendications précédentes, **caractérisé par le fait que** lesdits moyens de liaison (26, 27) entre lesdits premier et deuxième plateaux (23', 23") comportent des ergots (26) disposés à la périphérie de l'un desdits plateaux (23', 23") et coopérant avec des échancrures (27) opposées sur la périphérie de l'autre plateau (23", 23') de manière à bloquer ledit deuxième plateau (23") en rotation par rapport audit premier plateau (23').

## Claims

1. Electromechanical disc brake caliper comprising a casing (2) which houses an electric motor (3) which is able to actuate a ball screw (4) connected to a transverse support (23) of a first brake pad (6), a second brake pad (5) being connected to the casing (2) so as to be arranged opposite the said first brake pad (6) such that a brake disc (7) can be accommodated between them, the said ball screw (4) being able to move said brake pads (5, 6) towards one another upon a braking action in order to clamp the said brake disc (7) between them, **characterized in that** the said transverse support (23) is composed of a first plate (23') and of a second plate (23") which are wholly parallel to one another, the said first and second plates (23', 23") being coupled in rotation to one another by connection means (26, 27) and bearing against one another by relatively limited respective central bearing surfaces (29, 30) surrounded by annular surfaces (33, 34) which define between them an annular free space (35) so as to allow a slight inclination of the said second plate (23") with respect to the said first plate (23') during the operation of the caliper.

2. Brake caliper according to Claim 1, **characterized in that** the said bearing surfaces (29, 30) are provided, on the one hand, on a protuberance (31) on one of the said first and second plates (23', 23") and, on the other hand, in a cavity (32) formed in the other plate (23", 23' ) .

3. Brake caliper according to Claim 1 or 2,
**characterized in that** the said bearing surfaces (29, 30) are planar surfaces.

4. Brake caliper according to Claim 3, **characterized in that** the said protuberance (31) and the said cavity (32) have wholly complementary frustoconical shapes.

5. Brake caliper according to Claim 4, **characterized in that** the diameter of the said bearing surface (30) in the said cavity (32) is slightly larger than that on the said bearing surface (29) of the said protuberance (31) in order to allow a slight radial travel of the said second plate (23") with respect to the said first plate (23)'.

6. Brake caliper according to any one of the preceding claims, **characterized in that** the said second plate (23") is retained by a flexible annular member (28) connected, on the one hand, to the said casing (2) and, on the other hand, to the periphery of the said second plate (23").

7. Brake caliper according to any one of the preceding claims, **characterized in that** the said second plate (23") is housed in an axial circular housing (36) extending over the major part of the outer face of the said first plate (23').

8. Brake caliper according to Claim 7 in combination with any one of Claims 1 to 5, **characterized in that** the said second plate (23") is retained against the first plate (23') by a spring ring (38) connected, on the one hand, to the periphery of the said first plate (23') and, on the other hand, to the periphery of the said second plate (23").

9. Brake caliper according to Claim 1, **characterized in that** the said spring ring (38) comprises teeth (39) which are uniformly distributed around its inner periphery and bear against the outer face of the said second plate (23").

10. Brake caliper according to any one of Claims 2 to 9, **characterized in that** the said protuberance (31) consists of an insert housed in a central circular cavity (41) in one of the said plates (23', 23'').

11. Brake caliper according to any one of the preceding claims, **characterized in that** the said means (26, 27) of connection between the said first and second plates (23', 23") comprise lugs (26) arranged at the periphery of one of the said plates (23', 23") and cooperating with opposed notches (27) on the periphery of the other plate (23", 23') so as to lock the said second plate (23") in rotation with respect to the said first plate (23').

## Patentansprüche

1. Bremssattel für eine elektromechanische Scheibenbremse mit einem Gehäuse (2), das einen Elektromotor (3) aufnimmt, der einen Kugelgewindetrieb (4) betätigen kann, welcher mit einem Querträger (23) eines ersten Bremsbelags (6) verbunden ist, wobei ein zweiter Bremsbelag (5) so mit dem Gehäuse (2) verbunden ist, dass er dem ersten Bremsbelag (6) gegenüber angeordnet ist, damit sie zwischen sich eine Bremsscheibe (7) aufnehmen können, wobei der Kugelgewindetrieb (4) die Bremsbeläge (5, 6) bei einem Bremsvorgang einander annähern kann, damit die Bremsscheibe (7) zwischen ihnen eingeklemmt wird, **dadurch gekennzeichnet, dass** der Querträger (23) aus einem ersten Teller (23') und einem zweiten Teller (23") besteht, die im Großen und Ganzen parallel zueinander angeordnet sind, wobei der erste und der zweite Teller (23', 23") durch Verbindungsmittel (26, 27) miteinander drehbar verbunden sind und sich jeweils über relativ begrenzte zentrale Anschlagflächen (29, 30) gegeneinander in Anlage befinden, welche von ringförmigen Flächen (33, 34) umgeben sind, die zwischen sich einen ringförmigen Freiraum (35) derart definieren, dass beim Betrieb des Sattels eine leichte Neigung des zweiten Tellers (23") bezüglich des ersten Tellers (23') ermöglicht wird.

2. Bremssattel gemäß Anspruch 1, **dadurch gekennzeichnet, dass** die Anschlagflächen (29, 30) einerseits auf einem, auf einem der ersten und zweiten Teller (23', 23") angeordneten Höcker (31) und andererseits in einer in dem anderen Teller (23", 23') ausgesparten Ausnehmung (32) vorgesehen sind.

3. Bremssattel gemäß Anspruch 1 oder 2, **dadurch gekennzeichnet, dass** die Anschlagflächen (29, 30) ebene Flächen sind.

4. Bremssattel gemäß Anspruch 3, **dadurch gekennzeichnet, dass** der Höcker (31) und die Ausnehmung (32) im Großen und Ganzen komplementäre, kegelstumpfartige Formen aufweisen.

5. Bremssattel gemäß Anspruch 4, **dadurch gekennzeichnet, dass** der Durchmesser der Anschlagfläche (30) in der Ausnehmung (32) etwas größer als derjenige auf der Anschlagfläche (29) des Höckers (31) ist, um einen leichten radialen Versatz des zweiten Tellers (23") bezüglich des ersten Tellers (23') zu ermöglichen.

6. Bremssattel gemäß einem der vorhergehenden Ansprüche, **dadurch gekennzeichnet, dass** der zweite Teller (23") durch ein nachgiebiges Ringelement (28) gehalten wird, das einerseits mit dem Gehäuse (2) und andererseits mit dem Umfang des zweiten Tellers (23") verbunden ist.

7. Bremssattel gemäß einem der vorhergehenden Ansprüche, **dadurch gekennzeichnet, dass** der zweite Teller (23") in einer kreisförmigen axialen Aufnahme (36) angeordnet ist, die sich über den größten Teil der Außenfläche des ersten Tellers (23') erstreckt.

8. Bremssattel gemäß Anspruch 7 in Kombination mit einem der Ansprüche 1 bis 5, **dadurch gekennzeichnet, dass** der zweite Teller (23") durch einen Federring (38), der einerseits mit dem Umfang des ersten Tellers (23') und andererseits mit dem Umfang des zweiten Tellers (23") verbunden ist, gegen den ersten Teller (23') gehalten wird.

9. Bremssattel gemäß Anspruch 8, **dadurch gekennzeichnet, dass** der Federring (38) Zähne (39) aufweist, die auf seinem Innenumfang gleichmäßig verteilt sind und gegen die Außenfläche des zweiten Tellers (23") in Anlage kommen.

10. Bremssattel gemäß einem der Ansprüche 2 bis 9, **dadurch gekennzeichnet, dass** der Höcker (31) aus einem Einsatz besteht, der in einer kreisförmigen zentralen Ausnehmung (41) des einen der Teller (23', 23") angeordnet ist.

11. Bremssattel gemäß einem der vorhergehenden Ansprüche, **dadurch gekennzeichnet, dass** die Verbindungsmittel (26, 27) zwischen dem ersten und dem zweiten Teller (23', 23") Noppen (26) aufweisen, die an dem Umfang einer der Platten (23', 23") angeordnet sind und derart mit gegenüberliegenden Einschnitten (27) auf dem Umfang des anderen Tellers (23", 23') zusammenwirken, das die Drehung des zweiten Tellers (23") bezüglich des ersten Tellers (23') blockiert wird.
